# EUROPÄISCHE PATENTSCHRIFT

(11) **EP 0 682 490 B1**
(45) Veröffentlichungstag und Bekanntmachung des Hinweises auf die Patenterteilung: **06.11.1996**
(21) Anmeldenummer: 95906871.9
(22) Anmeldetag: 03.02.1995
(51) Int. Cl.: A47J 36/08

(54) **KOCHGESCHIRR MIT DECKEL**
COOKING UTENSIL WITH LID
USTENSILE DE CUISINE A COUVERCLE

(30) Priorität: 15.02.1994 CH 440/94
(43) Veröffentlichungstag der Anmeldung: 22.11.1995
(73) Patentinhaber: SIGG AG HAUSHALTGERÄTE, CH-8501 Frauenfeld (CH)
(72) Erfinder: BATCHELOR, Mark, D-71263 Weil der Stadt (DE)
(74) Vertreter: Felber, Josef
(86) Internationale Anmeldenummer: CH9500024
(87) Internationale Veröffentlichungsnummer: WO9521562

(56) Entgegenhaltungen:
- DE-C- 293 995
- DE-U- 9 401 119
- FR-A- 360 534
- US-A- 1 567 160

## Beschreibung

Die vorliegende Erfindung betrifft ein Kochgeschirr, das aus einem Topf oder einer Pfanne mit zugehörigem Deckel besteht, wobei sowohl der Topf bzw. die Pfanne als auch der Deckel mit Griffen versehen ist, und der Deckel des Kochgeschirrs ein einfaches Abseihen der Kochflüssigkeit aus dem Kochtopf ermöglicht.

Häufig muss am Ende eines Kochvorganges das Kochgut von der Flüssigkeit, in der es gekocht wurde, teilweise oder vollständig getrennt bzw. abgeseiht werden. Dazu wird im einfachsten Fall ein Sieb verwendet, in welches das Kochgut samt Kochflüssigkeit geschüttet wird. Die Kochflüssigkeit läuft durch das Sieb ab und das Kochgut bleibt im Sieb zurück. Der Nachteil dieses Abseihvorganges ist, dass zunächst mehrere Handgriffe notwendig sind, und dass ein weiteres Kochgerät neben dem Kochtopf verwendet werden muss. Die Verwendung von zusätzlichen Kochgeräten bedeutet ja auch zusätzlichen Aufwand beim Abwasch. Ausserdem kühlt bei dem Abseihvorgang das Kochgut durch das Umgiessen in das Sieb etwas ab. Dieser Effekt ist oft unerwünscht und sollte, wenn möglich, vermieden werden können.

Eine andere Art des Abseihens ist die behelfsmässige Verwendung einer Abdeckvorrichtung des Kochtopfes, die es erlaubt, die im Kochtopf befindliche Flüssigkeit auszugiessen und das Kochgut im Kochtopf zurückzuhalten. Oft wird dazu ein zum Kochtopf passender Deckel verwendet. Der Deckel wird leicht dezentriert so auf den Topf aufgelegt, dass zwischen Deckelrand und Kochtopf ein Spalt entsteht, durch den die Flüssigkeit ausgegossen werden kann. Dabei wird mit den beiden Daumen der Deckel am Deckelrand gehalten. Ist die Spaltbreite zu gross, so kann es passieren, dass ein Teil des Kochguts mit der Kochflüssigkeit ausgegossen wird. Ausserdem besteht die Gefahr, dass man sich beim Ausgiessen entweder mit der Kochflüssigkeit oder auch mit dem Deckel Verbrennungen an den Fingern zuzieht. Diese Methode des Abseihens ist mit grösseren Kochgeschirren für eine Person fast unmöglich anzuwenden, da der Kochtopf aufgrund seines Gewichtes mit beiden Händen fest gehalten werden muss, und dann keine Hand mehr frei ist, um einen Deckel so zu halten, dass das Kochgut abgeseiht werden kann. Ausserdem bedarf es bei dieser Art des Abseihens immer einer gewissen Geschicklichkeit und Fingerfertigkeit, um mit den behelfsmässigen Mitteln das gewünschte Ziel, die Trennung des Kochgutes von der Kochflüssigkeit, zu erreichen.

Aus der FR-A-360 534 (J.W. WOOLVEN) vom 25. April 1906 ist eine Pfanne mit zugehörigem Deckel bekannt, der gegenüber der Pfanne verschwenkbar ist. Hierzu weist der Deckel einen Stiel auf, der am Endbereich des Pfannenstiels scharnierend mit diesem verbunden ist. Zum Abseihen des Pfanneninhalts wird der Deckel leicht angehoben und etwas geschwenkt. Hernach kann aber die heisse Pfanne nur am Pfannenstiel und Deckelstiel angehoben und in Ausgiesslage gebracht und gehalten werden. Wegen der ungünstigen Hebelverhältnisse ist das nur mit viel Kraftaufwand möglich.

Es ist daher die Aufgabe der vorliegenden Erfindung, ein Kochgeschirr bestehend aus einem Topf oder einer Pfanne mit einem Deckel zu schaffen, das ein einfaches und sicheres Abseihen der Kochflüssigkeit vom Kochgut mit minimalem Kraftaufwand ermöglicht, wobei der Deckel als Mittel zum Abseihen dient.

Diese Aufgabe wird gelöst von einem Kochgeschirr nach Patentanspruch 1.

Besonders vorteilhafte Ausführungen der Erfindung gehen aus den abhängigen Patentansprüchen hervor.

In den Zeichnungen ist ein beispielsweises, erfindungsgemässes Kochgeschirr in verschiedenen Ansichten gezeigt und in der nachfolgenden Beschreibung sind dessen Beschaffenheit und Anwendung ausführlich erläutert.

Es zeigt:
- Figur 1:: einen Kochtopf mit Deckel und Haltegriffen an Topf und Deckel, wobei der eine Deckelgriff einen Scharniernocken aufweist;
- Figur 2:: einen Kochtopf mit Deckel und Haltegriffen an Topf und Deckel, wobei der eine Topfgriff einen Scharniernocken aufweist;
- Figur 3:: einen Kochtopf mit Deckel in Ausgiesslage bei Abseihen des Kochgutes;
- Figur 4:: einen Kochtopf mit abgewinkelten Haltegriffen;
- Figur 5:: einen Kochtopf mit auf ihrer Unterseite gekrümmten Haltegriffen.

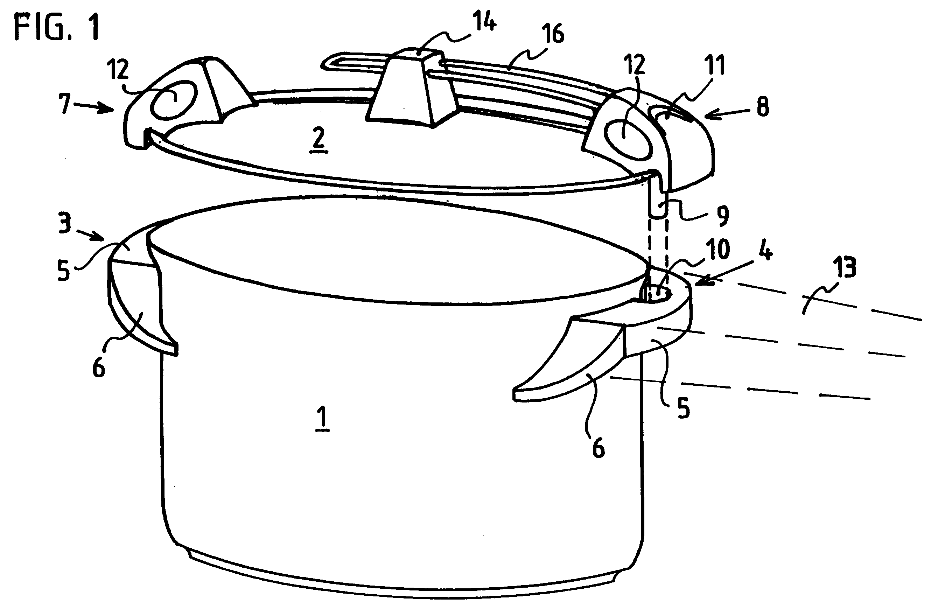

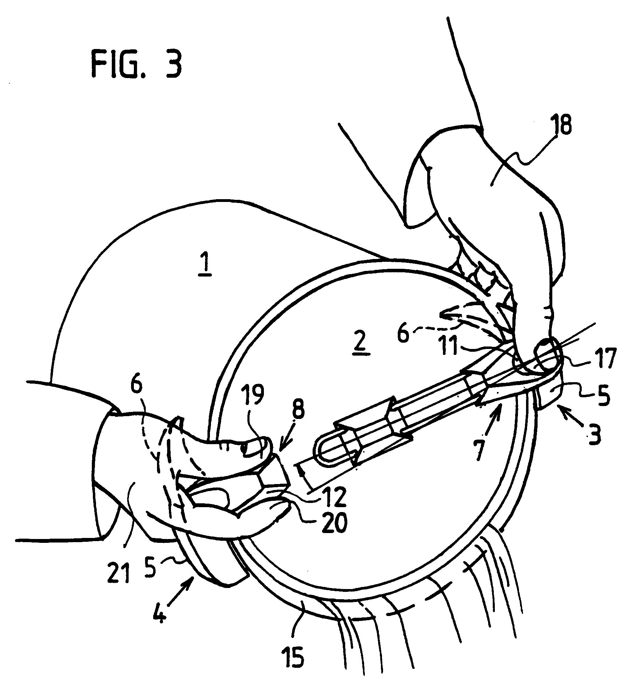

Ein Beispiel einer Ausführung des erfindungsgemässen Kochgeschirrs ist in der Figur 1 dargestellt. Die Bestandteile des Kochgeschirrs sind der Topf 1 und der zugehörige Deckel 2. An der Aussenseite des Topfes 1 sind zwei einander gegenüberliegende Griffe 3,4 angeordnet. Die Griff-Flächen dieser Griffe 3,4 weisen auf deren Untersichtseite im wesentlichen einen horizontal verlaufenden Abschnitt 5 auf und schliessen einen dagegen nach unten abgewinkelten Bereich 6 ein. Der zugehörige Deckel 2 weist an seinem Randbereich auf der Oberseite zwei gegenüberliegende Griffe 7,8 auf. Im aufgesetzten Zustand des Deckels 2 liegen dessen Griffe 7,8 über den Griffen 3,4 des Topfes 1. Dabei bildet der eine Deckelgriff 8 zusammen mit dem darunterliegenden Topfgriff 4 ein Scharnier, und zwar derart, dass der Deckel 2 in der horizontalen Ebene gegenüber dem Topf 1 schwenkbar ist. Dieses Scharnier zwischen dem Deckel 2 und dem darunterliegenden Topf 1 besteht hier aus einem senkrecht zur Deckelebene verlaufenden, aus dem Deckelgriff 8 ausgeformten Nocken 9, der aussen den Deckelrand nach unten überragt. Der darunterliegende Griff 4 des Topfes 1 sowie auch der auf der anderen Seite des Topfes 1 angeordnete Griff 3 hat je eine Ausnehmung 10, die den Nocken 9 bei aufgesetztem Deckel 2 aufnimmt. Je nach dem, wie der Deckel 2 aufgesetzt wird, kann daher der Nocken 9 sowohl in die Ausnehmung am Griff 3 oder wie hier gezeigt in jene Ausnehmung 10 am Griff 4 gelangen. Die Griffe 7,8 des Deckels 2 weisen auf ihrer Oberseite je eine konkave Vertiefung 11 zur Aufnahme der Daumenbeere einer Hand auf. Ebenso sind diese Griffe 7,8 an ihren beiden Seitenflächen 12 konkav eingebuchtet. Diese Einbuchtungen 12 dienen der Aufnahme von Daumen- und Zeigfingerbeere einer Hand und sind dazu bestimmt, das Halten des Deckels 2 bzw. das Schwenken des Deckels 2 beim Ausgiessen, das anhand der Figur 3 noch genauer beschrieben wird, zu erleichtern. Die Griffe 3,4 an der Topf-Aussenseite bestehen im wesentlichen aus einem einstückigen Formteil, welches ein Winkelstück mit zwei Schenkeln 5,6 bildet. Diese beiden Schenkel schliessen auf der Unterseite einen Winkel von zwischen 90° und 150° ein. Allgemein können diese Griffe 3,4 auch so geformt sein, dass die Unterseite einen nach unten gekrümmten Bogen beschreibt. Durch diese Formgebung der Griffe 3,4 wird sowohl das Schwenken des Topfes 1 in die Ausgiesslage als auch das Halten in dieser Position erheblich erleichtert gegenüber etwa herkömmlichen, gerade geformten Griffen.

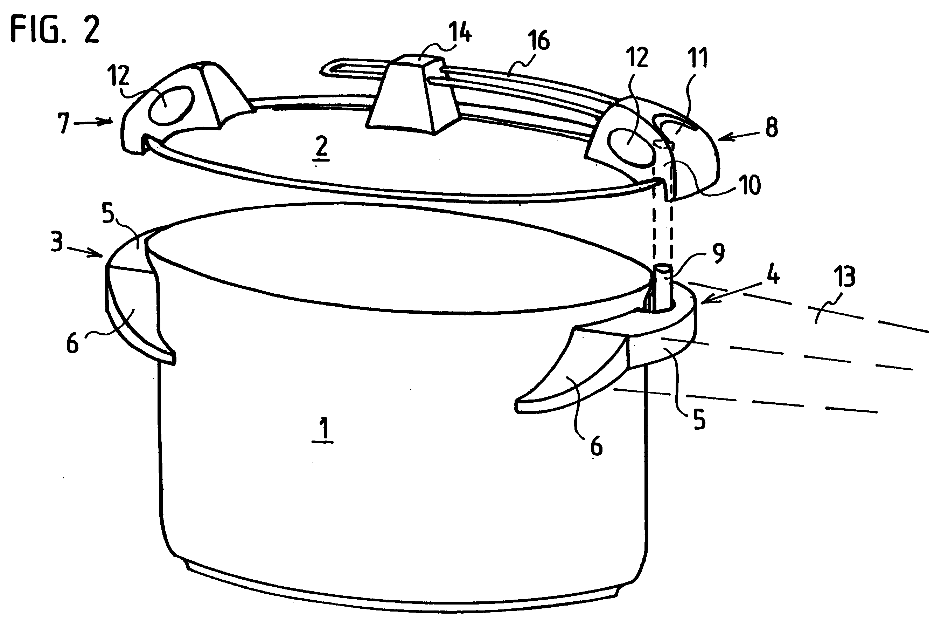

In einer anderen Ausführung, die in Figur 2 gezeigt ist, kann das Scharnier zwischen Deckel 2 einerseits und Topf 1 oder Pfanne andrerseits auch derart ausgebildet sein, dass es aus einem aus dem Topfgriff 4 nach oben ausgeformten Nocken 9 besteht. Bei aufgelegtem Deckel 2 nimmt dann eine Ausnehmung 10 im darüberliegenden Griff 8 des Deckels 2 den Nocken 9 auf. Auch der Griff 7 hat dann eine solche Ausnehmung, damit der Deckel 2 um 180° gedreht ebenfalls aufsetzbar ist.

Die Griffe 3,4;7,8 des erfindungsgemässen Kochgeschirrs sind im beschriebenen Beispiel aus wärmebeständigem Kunststoff gefertigt. Sie können aber auch aus anderen Materialien gefertigt sein, die möglichst schlechte Wärmeleiteigenschaften haben sollen. Die beschriebenen Griffe des Kochgeschirrs, die auf der einen Seite ein Scharnier bilden, sind natürlich nicht nur an Kochtöpfen anwendbar, sondern auch an allen erdenklichen Kochgefässen, die mittels eines Deckels abdeckbar sind. Insbesondere ist dabei an Stielpfannen mit Deckel zu denken, deren Stiel in diesem Fall als radiale Verlängerung 13 des Pfannengriffes 4 ausgeformt ist. In der Figur 1 und 2 ist eine solche Verlängerung 13 des Pfannengriffes 4 durch gestrichelt gezeichnete Linien angedeutet.

Der Deckel 2 des beispielsweisen, erfindungsgemässen Kochgeschirrs weist in der Mitte auf seiner Oberseite ein weiteres Griffelement 14 auf, welches mit dem einen Griff 8 im Randbereich des Deckels 2 über einen horizontal liegenden Bügel 16 mit der Deckel-Bombierung nachgeführter Krümmung verbunden ist. Durch die zentrale Montage des Griffelementes 14 am Deckel 2 wird das Abheben des Deckels 2 vom Topf 1 erleichtert und kann damit auch bei grösseren Deckelausführungen problemlos mit einer Hand durchgeführt werden.

Die Figur 3 zeigt das erfindungsgemässe Kochgeschirr in der Ausgiesslage und soll die Anwendung des mittels des gebildeten Scharniers schwenkbaren Deckels 2 veranschaulichen. Am Ende des Kochvorganges, nach dem das Kochgut durch Abseihen von der Kochflüssigkeit getrennt werden soll, wird der Topf 1 an den beiden Griffen 3,4 erfasst. Der Daumen 17 der Hand 18, die den Griff 7 hält, welcher im gezeigten Beispiel zusammen mit dem darunterliegenden Topfgriff 3 das Scharnier bildet, liegt auf der konkaven Vertiefung 11 auf und drückt leicht gegen den Topf 1. Mit dem Daumen 19 und Zeigefinger 20 der anderen Hand 21 wird der Griff 7 am Deckel 2 an den konkaven Einbuchtungen 12 an seinen Seitenflächen 12 gehalten. Nun wird der Topf 1 leicht gekippt und so langsam in die Ausgiesslage gebracht. In der Ausgiesslage halten nun die Finger beider Hände 18,21 den Topf 1 an den nach unten gekrümmten Schenkeln 5,6 der Griffe 3,4. Der Daumen 17, der auf dem Griff 7 mit dem Scharnier aufliegt, drückt den Deckel 2 leicht gegen den Topf 1. Damit wird erreicht, dass der Deckel 2 um die Achse des Nockens 9 geschwenkt werden kann. Mit dem Daumen 19 und Zeigefinger 20 der anderen Hand 21 wird der Deckel 2 am Griff 8 gehalten und durch leichtes Drücken des Zeigefingers 20 in Richtung Daumen 19 wird der Deckel 2 um die Achse des Scharniers geschwenkt. Dadurch entsteht ein Spalt 15 zwischen Kochtopf 1 und Deckel 2. Die Weite des Spaltes 15 kann durch entsprechende Bewegungen mit dem Daumen 19 und Zeigefinger 20 leicht variiert und den jeweiligen Bedürfnissen beim Abseihvorgang angepasst werden. Auf diese Art kann das Kochgut ohne zusätzliche Küchengeräte abgeseiht werden. Die Formgebung der Griffe 3,4 erleichtert einerseits das Ausgiessen des Kochgutes bzw. der Kochflüssigkeit aus dem Kochtopf, anderseits ermöglicht sie gemeinsam mit dem Deckel 2 und dessen Scharnier ein Abseihen der Kochflüssigkeit. Weil jeweils an zwei Griffen, entweder in jenen am Deckel 2 oder dann aber an jenen am Topf 1 Ausnehmungen für den Nocken 9 vorhanden sind, kann der Deckel auch um 180° gedreht aufgesetzt werden. Je nach dem, ob der Benützer Rechts- oder Linkshänder ist, kann er dadurch den Deckel so aufsetzen, dass ihm das Schwenken des aufgesetzten Deckels 2 und damit das Abseihen leicht von der Hand geht, denn der Topf 1 oder die Pfanne müssen ja sowohl von Rechts- wie auch von Linkshändern von der gleichen Seite her ergriffen werden. Im Beispiel, das in Figur 3 gezeigt ist, betätigt die rechte Hand 21 den Deckel 2 und bringt ihn in die Schwenklage. Ebensogut könnte hier der Deckel 2 also um 180° gedreht aufgesetzt werden und in diesem Falle würde die linke Hand den Deckel 2 schwenken.

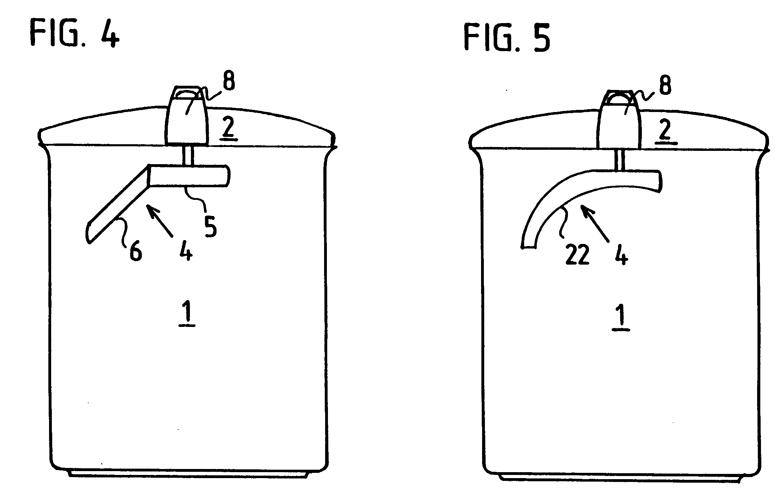

Figur 4 zeigt einen Topf 1 von der Seite. Der auf dieser Seite sichtbare Topfgriff 4 besteht wie schon beschrieben im wesentlichen aus einem einstückigen Formteil, welches ein Winkelstück mit zwei Schenkeln 5,6 bildet. Diese beiden Schenkel schliessen auf der Unterseite einen Winkel von zwischen 90° und 150° ein. Soll nun der Topf 1 bloss angehoben werden, so wird er beidseits unter den Schenkeln 5 ergriffen. Zum Ausgiessen kann man den Topf 1 an den Schenkeln 6 der Griffe 4 ergreifen und das zunehmende Kippen des Topfes 1 wird dadurch erleichtert, indem in dieser Lage die Griffe 3,4 besser in den Händen liegen.

Wie Figur 5 zeigt, können diese Griffe 3,4 auch so geformt sein, dass die Unterseiten je einen nach unten gekrümmten Bogen 22 beschreiben. Durch diese Formgebung der Griffe 3,4 wird ebenfalls sowohl das Schwenken des Topfes 1 in die Ausgiesslage als auch das Halten in dieser Position erheblich erleichtert gegenüber etwa herkömmlichen, gerade geformten Griffen.

## Patentansprüche

1. Kochgeschirr, bestehend aus einem Topf (1) oder einer Pfanne mit zugehörigem Deckel (2), wobei an der Aussenseite von Topf (1) oder Pfanne wenigstens ein Griff (4) angeordnet ist, und der Deckel (2) wenigstens einen Griff (8) aufweist, der den Deckelrand in radialer Richtung überragt, wobei im aufgesetzten Zustand des Deckels (2) diese beiden Griffe (8;4) von Deckel (2) einerseits und Topf (1) oder Pfanne andrerseits miteinander ein Scharnier bilden, derart, dass der Deckel (2) in der horizontalen Ebene gegenüber dem Topf (1) oder der Pfanne schwenkbar ist, wodurch der flüssige Inhalt in Ausgiesslage abseihbar ist, dadurch gekennzeichnet, dass aussen im oberen Randbereich des Topfes (1) oder der Pfanne zwei einander peripher gegenüberliegende Griffe (3,4) angeordnet sind, und dass der zugehörige Deckel (2) an seinem Randbereich ebenfalls zwei einander peripher gegenüberliegende Griffe (7,8) aufweist, die den Deckelrand radial überragen, wobei das Scharnier von zwei im aufgesetzten Zustand des Deckels (2) übereinanderliegenden Griffen (4;8) derart gebildet wird, dass der eine Griff (8) am Deckel (2) einen gegenüber der horizontalen Ebene des Deckels (2) senkrecht nach unten abstehenden Nocken (9) aufweist, und dass die beiden Griffe (3,4) am Topf (1) oder der Pfanne je eine Ausnehmung (10) aufweisen, wobei der Nocken (9) im aufgesetzten Zustand des Deckels (2) in eine der beiden Ausnehmungen (10) einpasst, oder dass umgekehrt ein Nocken (9) von einem Topf- oder Pfannengriff (4) senkrecht nach oben absteht und jeweils in eine der an den beiden Deckelgriffen (7,8) vorhandenen Ausnehmungen (10) einpasst.

2. Kochgeschirr nach Anspruch 1, dadurch gekennzeichnet, dass die Griff-Flächen der an Topf (1) oder Pfanne angeordneten Griffe (3,4) auf ihrer Untersichtseite im wesentlichen einen horizontal verlaufenden Abschnitt (5) und einen dagegen nach unten gerundeten oder abgewinkelten Bereich (6) einschliessen.

3. Kochgeschirr nach einem der vorhergehenden Ansprüche, dadurch gekennzeichnet, dass der oder die Griffe (7,8) am Deckel (2) auf ihrer Oberseite je eine konkave Vertiefung (11) zur Aufnahme der Daumenbeere (17) einer Hand (18) aufweisen, und auf ihren beiden Seitenflächen, deren Normalen bezüglich des Deckels etwa in Umfangsrichtung zeigen, konkave Einbuchtungen (12) aufweisen, die zur Aufnahme von Daumen- (19) und Zeigfingerbeere (20) einer Hand (21) bestimmt sind.

4. Kochgeschirr nach einem der Ansprüche 2 bis 3, dadurch gekennzeichnet, dass die Griffe (3,4) an der Topf- oder Pfannen-Aussenseite im wesentlichen je aus einem einstückigen Formteil bestehen, welches ein Winkelstück mit zwei Schenkeln (5,6) bildet, die auf der Unterseite einen Winkel von zwischen 90° und 150° einschliessen.

5. Kochgeschirr nach einem der Ansprüche 2 bis 3, dadurch gekennzeichnet, dass die Griffe (3,4) an der Topf- oder Pfannen-Aussenseite im wesentlichen je aus einem einstückigen Formteil bestehen, dessen Unterseite einen nach unten gekrümmten Bogen (22) beschreibt.

6. Kochgeschirr nach einem der vorhergehenden Ansprüche, dadurch gekennzeichnet, dass im Falle einer Pfanne mit Stiel der Pfannenstiel als radiale Verlängerung (13) des einen Pfannengriffes (4) aus diesem einstückig als Verlängerung ausgeformt ist.

7. Kochgeschirr nach einem der vorhergehenden Ansprüche, dadurch gekennzeichnet, dass der Deckel (2) in der Mitte auf seiner Oberseite ein weiteres Griffelement (14) aufweist, welches mit dem einen Griff (8) im Randbereich des Deckels (2) über einen horizontal liegenden Bügel (16) mit der Deckel-Bombierung nachgeführter Krümmung verbunden ist.

## Claims

1. Cooking utensil consisting of a pot (1) or a pan with a matching lid (2), with at least one grip (4) disposed on the outside of the pot (1) or the pan, and the lid (2) having at least one grip (8) which projects beyond the lid edge in the radial direction, with these two grips (8,4) on the lid (2) on the one hand, and on the pot (1) or the pan on the other, forming a hinge with each other when the lid (2) is on, such that the lid (2) can be swivelled along the horizontal plane with respect to the pot (1) or the pan, whereby the liquid content can be drained away in a pouring off position, characterized in that two grips lying peripherally opposite each other (3,4) are disposed outside on the top edge portion of the pot (1) or the pan, and in that the matching lid (2) also has two grips (7,8) positioned peripherally opposite each other on its edge portion, which project radially beyond the edge of the lid, whereby when the lid (2) is on, the hinge is formed by two grips positioned one over the other (4,8) in that the one grip (8) on the lid (2) has a cam (9) that projects vertically downwards in relation to the horizontal plane of the lid (2), and in that each of the two grips (3,4) on the pot (1) or the pan has a recess (10), such that the cam (9) fits into one of the two recesses (10) when the lid (2) is on, or in that vice versa, a cam (9) projects vertically upwards from one pot or pan grip (4) and fits into one of the recesses (10) contrived in the two lid grips (7,8).

2. The cooking utensil of claim 1, characterized in that, seen from the underside elevation, the surfaces of the grips (3,4) disposed on the pot (1) or the pan essentially comprise a section (5) which runs horizontally and, counter to it, a section (6) which is downwardly tapered or angled.

3. The cooking utensil of one of the previous claims, characterized in that the grip or grips (7,8) on the lid (2) each have a concave indent (11) on the top surface to accommodate the thumb pad (17) of one hand (18), and concave recesses (12) on both the lateral surfaces, whose normals in relation to the lid point approximately towards the periphery, which are intended to accommodate the thumb pad (19) and index finger pad (20) of one hand (21).

4. The cooking utensil of one of claims 2 to 3, characterized in that the grips (3,4) on the outside of the pot or the pan each essentially comprise a one-piece moulded part which forms an angular element with two arms (5,6) which make up an angle of between 90° and 150° on the underside.

5. The cooking utensil of one of claims 2 to 3, characterized in that the grips (3,4) on the outside of the pot or the pan each essentially comprise a one-piece moulded part whose underside describes a downwardly curved arc (22).

6. The cooking utensil of one of the previous claims, characterized in that if the pan has a handle, the pan handle is constructed from one of the pan grips (4) as an integral radial extension (13) thereof.

7. The cooking utensil of one of the previous claims, characterized in that the lid (2) has another grip element (14) in the middle of its upper side, which is connected with one grip (8) in the edge portion of the lid (2) via a horizontally positioned arm (16) which is curved to follow the camber of the lid.

## Revendications

1. Récipient de cuisson, constitué par une casserole (1) ou une poêle comportant un couvercle (2) correspondant, l'extérieur de la casserole (1) ou de la poêle présentant au moins une poignée (4) et le couvercle (2) présentant au moins une poignée (8), dépassant radialement le bord du couvercle, cependant que, quand le couvercle (2) est posé sur le récipient, ces deux poignées (8; 4) d'une part du couvercle (2) et d'autre part de la casserole (1) ou poêle forment ensemble une charnière, de sorte que le couvercle (2) peut pivoter à l'horizontale par rapport à la casserole (1) ou à la poêle, de manière que le contenu liquide puisse être déversé dans une passoire, caractérisé en ce que, dans la zone périphérique supérieure extérieure de la casserole (1) ou de la poêle sont disposées deux poignées (3,4) opposées périphériquement l'une à l'autre et que le couvercle correspondant (2) présente également sur sa zone périphérique deux poignées (7, 8) opposées périphériquement l'une à l'autre, dépassant radialement le bord du couvercle, cependant que la charnière de deux poignées (4; 8) superposées quand le couvercle (2) est posé sur le récipient est conçue de sorte qu'une poignée (8) du couvercle (2) présente un tourillon (9) saillant verticalement vers le bas par rapport à l'horizontale du couvercle (2) et que les deux poignées (3, 4) disposées sur la casserole (1) ou la poêle présentent chacune un évidement (10), cependant que le tourillon (9) s'insère dans un des deux évidements (10), quand le couvercle (2) est posé sur le récipient ou qu'inversement un tourillon (9) d'une poignée (4) de casserole ou de poêle est en saillie verticalement vers le haut et s'insère chaque fois dans un des évidements (10) se trouvant sur les deux poignées (7, 8) de couvercle.

2. Récipient de cuisson suivant la revendication 1, caractérisé en ce que les surfaces des poignées disposées sur la casserole (1) ou la poêle comportent sur leur face inférieure essentiellement un tronçon (5) horizontal et, par rapport à celui-ci, une zone (6) arrondie ou coudée vers le bas.

3. Récipient de cuisson suivant une des revendications précédentes, caractérisé en ce que la ou les poignées (7, 8) du couvercle (2) présentent chacune, sur leur dessus, une concavité (11), destinée à recevoir le pouce (17) d'une main (18), cependant qu'elles présentent, sur leurs deux faces latérales, dont les normales par rapport au couvercle sont approximativement orientées dans le sens de la périphérie, des concavités (12), destinées à recevoir le pouce (19) et l'index (20) d'une main (21).

4. Récipient de cuisson suivant une des revendications 2 à 3, caractérisé en ce que les poignées (3, 4) disposées à l'extérieur de la casserole ou de la poêle sont constituées chacune essentiellement d'une seule pièce moulée, formant une pièce angulaire à deux branches (5, 6), comportant sur le dessous un angle de 90 à 150°.

5. Récipient de cuisson suivant une des revendications 2 à 3, caractérisé en ce que les poignées (3, 4) disposées à l'extérieur de la casserole ou de la poêle sont constituées chacune essentiellement d'une seule pièce moulée, dont la face inférieure décrit un arc (22) courbé vers le bas.

6. Récipient de cuisson suivant une des revendications précédentes, caractérisé en ce que, dans le cas d'une poêle à queue, cette queue, constituant le prolongement radial (13) de la poignée (4) de poêle, est constituée d'une seule pièce à partir de la poignée.

7. Récipient de cuisson suivant une des revendications précédentes, caractérisé en ce que le couvercle (2) présente en son centre, sur sa partie supérieure, un autre élément de poignée (14), qui est relié à une (8) des poignées située dans la zone périphérique du couvercle (2) par l'intermédiaire d'un étrier horizontal (16), présentant une courbure qui épouse le bombé du couvercle.
